# EUROPÄISCHE PATENTSCHRIFT

(11) **EP 0 919 596 B1**
(45) Veröffentlichungstag und Bekanntmachung des Hinweises auf die Patenterteilung: **09.04.2003**
(21) Anmeldenummer: 98121885.2
(22) Anmeldetag: 18.11.1998
(51) Int. Cl.: C09B 31/08, D21H 21/28, C09D 11/00

(54) **Disazofarbstoffe**
Disazo dyes
Colorants disazoiques

(30) Priorität: 01.12.1997 DE 19753223
(43) Veröffentlichungstag der Anmeldung: 02.06.1999
(73) Patentinhaber: Bayer Aktiengesellschaft, 51368 Leverkusen (DE)
(72) Erfinder: Mennicke, Winfried Dr., 51375 Leverkusen (DE); Kunde, Klaus Dr., 53819 Neunkirchen-Seelscheid (DE)

(56) Entgegenhaltungen:
- EP-A- 0 514 330
- EP-A- 0 534 903
- EP-A- 0 597 672
- EP-A- 0 622 424
- EP-A- 0 623 704
- EP-A- 0 827 984
- WO-A-98/44051
- CH-A- 148 003
- CH-A- 148 005
- DE-C- 293 554
- FR-A- 380 540
- FR-A- 392 589
- FR-A- 402 126
- FR-A- 456 232
- FR-A- 689 111
- FR-A- 870 239
- FR-A- 934 352
- FR-E- 53 803

## Beschreibung

Die vorliegende Erfindung betrifft die Verwendung von Disazofarbstoffen zum Färben von Papier.

FR,A,870239 offenbart die Verwendung von Disazofarbstoffen zum Färben von Textilmaterialien. Aus der EP,A,0534903 ist ein Verfahren zum Färber von Papier mit Disazofarbstoffen bekannt. In der WO.A.9844051 (älteres Recht nach Artikel 54(3)) werden Disazofarbstoffe zum Ink Jet. Druck offenbart.

Die Erfindung betrifft die Verwendung von Farbstoffen der Formel (4) zum Färben von Papier in der Masse oder in der Oberfläche, wobei der Ink-Jet-Druck für die Länder CH, DE, FR, GB, IT und LI ausgenommen ist, 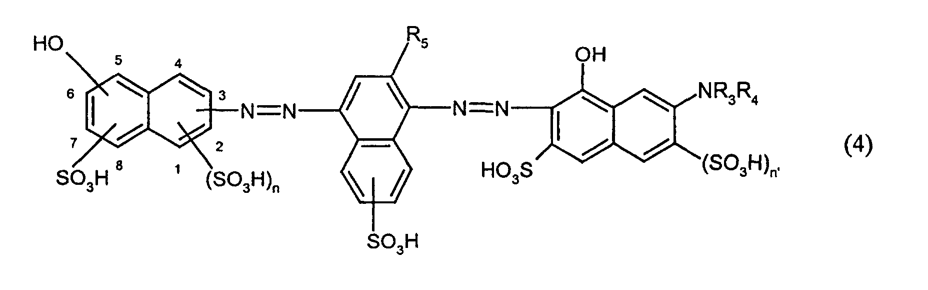 worin
- R₃: für Wasserstoff, für unsubstituiertes C₁-C₄-Alkyl, oder durch NH₂, Di-(C₁-C₄-alkyl)amino, OH oder C₁-C₄-Alkoxy substituiertes C₁-C₄-Alkyl, für unsubstituiertes Aryl, oder für ein- bis vierfach gleich oder verschieden durch C₁-C₄-Alkyl, C₁-C₄-Alkoxy, NH₂, OH, Sulfo oder Carboxy substituiertes Aryl, für Ureido, Formyl, C₁-C₄-Alkylcarbonyl, für unsubstituiertes Benzoyl oder für ein- bis vierfach gleich oder verschieden durch C₁-C₄-Alkyl, C₁-C₄-Alkoxy, Sulfo oder Carboxy substituiertes Benzoyl,
- R₄: für Wasserstoff, unsubstituiertes C₁-C₄-Alkyl oder für durch Hydroxy oder C₁-C₄-Alkoxy substituiertes C₁-C₄-Alkyl
und
- n und n': unabhängig voneinander für die Zahl 0 oder 1 stehen,
wobei im linken Naphthylring der Formel (1) die OH-Gruppe in 5-, 6- oder 8-Stellung, die SO₃H-Gruppe in 6-, 7- oder 8-Stellung, die (SO₃H)ₙ-Gruppe in 1-, 3-oder 4-Stellung und die Azogruppe in 1- oder 2-Stellung stehen,
und
- R₅: für Wasserstoff, C₁-C₄-Alkyl oder C₁-C₄-Alkoxy steht.

Die erfindungsgemäßen Farbstoffe der Formel (4) können jeweils sowohl als freie Säure oder teilweise oder ganz in Form ihrer Salze vorliegen. Sie werden im Allgemeinen als Salze eingesetzt, insbesondere als Lithium-, Natrium-, Kalium-, Ammonium-, Mono-, Di- oder Tris-C₁-C₄-Alkylammonium-, Mono-, Di- oder Tris-C₁-C₄-Alkanolammonium- oder gemischte C₁-C₄-Alkyl-C₁-C₄-alkanolammonium-Salze.

Der Ausdruck Di-(C₁-C₄-alkyl)amino in der Definition von R₃ bedeutet C₁-C₄-Alkylamino und C₁-C₄-Dialkylamino.

Besonders eignen sich die Farbstoffe (4) zur Herstellung von in der Masse sowie an der Oberfläche gefärbten Papieren, wobei geleimte und ungeleimte Papiersorten in Frage kommen, welche von gebleichtem und ungebleichtem Zellstoff unterschiedlicher Provenienz, wie Nadel- oder Laubholz-sulfit- oder -sulfat-Zellstoff herrühren können. Zum Färben von Papier in der Masse werden die Farbstoffe (4) der Papierpulpe vor der Blattbildung zugesetzt. Dies kann entweder beim Dickstoff nach dem Aufschlagen der Cellulose oder beim Dünnstoff vor dem Auslaufen auf der Papiermaschine geschehen. Zum Färben von in der Masse geleimten Papier werden die Farbstoffe (4) vorzugsweise vor dem Leimungsmittel dem Dünnstoff zugesetzt, und zum Färben von Papier an der Oberfläche werden sie vorzugsweise in einer konzentrierten Stärkelösung aufgelöst und in dieser Form mittels einer Leimpresse auf das Papier aufgebracht. Die Farbstoffe (4) können auch bei der Tauchfarben von Papier eingesetzt werden.

Die Farbstoffe der Formel (4) geben auf den oben genannten Materialien dunkelviolette bis schwarze Färbungen mit guten Naß- und Lichtechtheiten. Beim Färben auf Papier zeichnen sie sich durch einen hohen Aufziehgrad aus. Die dabei in hoher coloristischer Ausbeute anfallenden Papierfärbungen weisen eine gute Bleichbarkeit auf, sind alaun- und weitgehend pH-unempfindlich und nicht nur gegenüber Wasser, sondern auch gegen Milch, Fruchtsäfte und alkoholische Getränke beständig.

Die Farbstoffe der Formel (4) eignen sich ferner zur Herstellung von Aufzeichnungsflüssigkeiten für Tintenstrahl-Druckverfahren, z. B. in Verbindung mit bubblejet- oder Piezo-Drucksystemen.

Zur Herstellung der Drucktinten werden ein oder mehrere Farbstoffe der Formel (4) in möglichst reiner salzarmer Form in Wasser gegebenenfalls unter Zusatz von einem oder mehreren wasserlöslichen organischen Lösungsmitteln, hydrotropen Hilfsmitteln und weiteren üblichen Zusätzen gelöst. Vorzugsweise wird zur Herstellung der Drucktinten eine wässrige Farbstofflösung verwendet, die zuvor durch Anwendung von Membrantrennverfahren, wie beispielsweise Mikrofiltration, Ultrafiltration, Nanofiltration, Reversosmose oder deren Kombinationen, gereinigt und aufkonzentriert worden ist. Bevorzugte Methode ist die Ultrafiltration an Membranen, die für Salze und Verbindungen mit einem Molekulargewicht von unter ca. 20 000 Dalton durchlässig sind.

Für die Drucktinten geeignete organische Lösungsmittel und hydrotrop wirksame Mittel sind ein- und mehrwertige Alkohole und deren Ether und Ester, Nitrile, Carbonsäureamide, cyclische Amide, Harnstoffe, Ester, Sulfone und Sulfoxide. Besonders geeignet sind beispielsweise Methanol, Ethanol, Propanol, Ethylenglykol und dessen Monomethyl, -ethyl-, und -propylether, 1,2-Propylenglykol, 1-Methoxyund 1-Ethoxy-2-, propanol, Diethylenglykol, Diethylenglykolmonomethyl- und - ethylether, Dipropylenglykol, Triethylenglykol, 1,5-Pentandiol, Glycerin, Essigsäure-2-hydroxyethylester und 2-(2-hydroxyethoxy)-ethylester, 2-Hydroxypropionitril, Formamid, Dimethylformamid, Pyrrolidon, N-Methylpyrrolidon, 6-Caprolactam, N-Methyl-6-caprolactam, Harnstoff, Tetramethylharnstoff, 1,3-Dimethyl-2-imidazolidinon, N,N'-Dimethypropylenharnstoff, Butyrolacton, Dimethylsulfoxid, Dimethylsulfon, Sulfolan und Polyethylenglykole mit einem Molekulargewicht bis 500 Dalton.

Als in Drucktinten übliche Zusätze kommen solche ionische und nichtionische Stoffe in Frage, mit denen die Viskosität und/oder Oberflächenspannung in die für die Anwendung erforderlichen Bereiche eingestellt werden kann, ferner Fungizide, Bakterizide und Bindemittel, wie beispielsweise Acrylatbinder.

Die Drucktinten können außer einem oder mehreren Farbstoffen der Formel (4) auch noch andere vom Color Index her bekannte Farbstoffe enthalten, die zur Nuancierung dienen können.

Die Drucktinten setzen sich zusammen aus:
- 0,5 bis 20 Gew.% mindestens eines Farbstoffs der Formel (4),
- gegebenenfalls 0,1 bis 5 Gew.% mindestens eines der Nuancierung dienenden Farbstoffs,
- 50 bis 99,5 Gew.% Wasser,
- 0 bis 30 Gew.% eines oder mehrerer wasserlöslicher organischer Lösungsmittel und/oder hydrotrop wirksamer Mittel,
- und 0 bis 30 Gew.% übliche Zusätze, wie Viskosität und/oder Oberflächenspannung beeinflußende Mittel, Fungizide, Bakterizide und Bindemittel.

Bevorzugtes Aufzeichnungsmaterial für die Tintenstrahl-Drucksysteme ist Papier.

### Beispiel 1

26,6 g 90,0 %ige 2-Amino-5-naphthol-7-sulfonsäure werden in 200 ml Wasser durch Zusatz von 4,2 g LiOH·H₂O gelöst. Die Lösung wird mit 23 ml 4,35 N Natriumnitrilösung versetzt und innerhalb von 20 Minuten auf ein Gemisch von 100 ml Wasser, 35 ml 10 N Salzsäure und 100 g Eis ausgetragen. Die dabei entstehende Suspension wird bei Temperaturen bis höchstens 20°C eineinhalb Stunde nachgerührt. 27,1 g 82,4 %ige 1-Aminonaphthalin-6-sulfonsäure werden in 200 ml Wasser mit ca. 10 ml 10 N Natronlauge gelöst und innerhalb von 20 Minuten in die Suspension der Diazotierung eingetragen. Das Gemisch wird durch Zutropfen von insgesamt 80 ml 2,44 N Natriumacetat-Lösung auf pH 3,0 gestellt, 5 Stunden lang bei diesem pH-Wert gehalten, danach auf pH 3,5 gestellt und zwei Stunden nachgerührt. Nach beendeter Kupplung wird der pH durch Zutropfen von 10 N Natronlauge auf 7,5 gestellt. Der Monoazofarbstoff der Formel 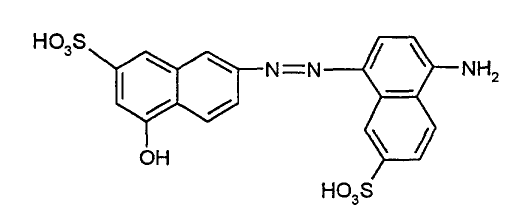 wird durch Zusatz von 160 g Kochsalz und dreistündiges Nachrühren gefällt und abgesaugt.

Die Paste des Monoazofarbstofe wird zur weiteren Bearbeitung in 250 ml Wasser gelöst und mit 23 ml 4,35 N Natriumnitrilösung versetzt. Das Gemisch wird innerhalb von 30 Minuten in eine Vorlage aus 150 ml Wasser, 200 g Eis und 35 ml 10 N Salzsäure getropft. Man rührt 2,5 Stunden bei 10 bis15°C nach, bis die Diazotierung beendet ist, und entfernt dann überschüssige salpetrige Säure mit Aminosulfonsäure. 27,19 g 88 %ige 2-Amino-8-naphthol-6-sulfonsäure werden in 200 ml Wasser durch Zugabe von 55 g festem Soda gelöst. Nach Zugabe von 250 g Eis läßt man innerhalb von 45 Minuten die Suspension der Diazotierung zulaufen. Das Gemisch wird 4 Stunden ohne Eiszusatz nachgerührt, danach mit 10 Vol % Natriumchlorid versetzt und abgesaugt. Der erhaltene Bisazofarbstoff, der in Form der freien Säure der Formel 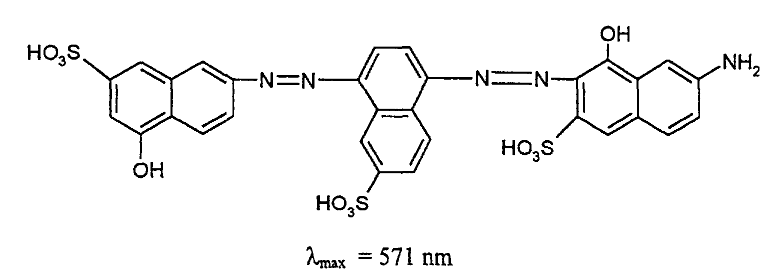 entspricht, wird zur Reinigung in 1,5 Liter 60°C heißem Wasser gelöst, mit 7,5 Vol % Natriumchlorid gefällt und nochmals abgesaugt. Er stellt nach dem Trocknen ein schwarzes Pulver dar, welches nahezu vollständig auf Papier und Baumwolle aufzieht und dabei licht- und naßechte schwarze Färbungen liefert.

### Beispiel 2

Verwendet man anstelle der 27,1 g 82,4 %igen 1-Aminonaphthalin-6-sulfonsäure des Beispiels 1 25,8 g 86,4 %ige 1-Aminonaphthalin-7-sulfonsäure und anstelle der 27,19 g 88 %igen 2-Amino-8-naphthol-6-sulfonsäure des Beispiels 1 52,6 g 60,7 %-ige 2-Amino-8-naphthol-3,6-disulfonsäure und verfährt sonst, wie in diesem Beispiel beschrieben, so erhält man den Papier und Baumwolle und Leder in tiefschwarzen Tönen färbenden Farbstoff der Formel

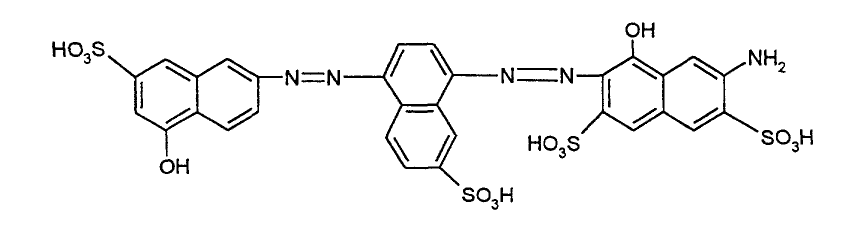

### Beispiel 3

Unter den gleichen Bedingungen gelangt man bei Verwendung der entsprechenden Ausgangsverbindungen den schwarzen Disazofarbstoff der Formel

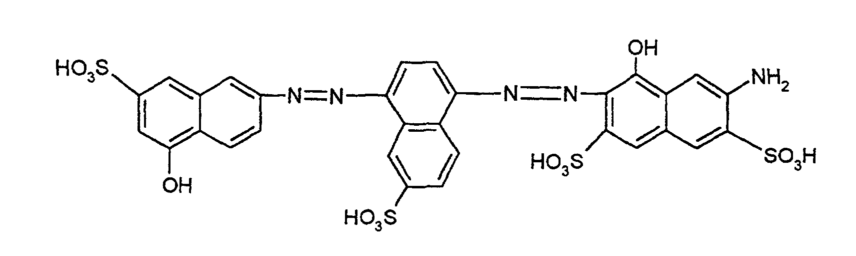

Die nach der Umfällung des Farbstoffes erhaltene Paste wird in ca. 1000 ml Wasser gelöst. Die Lösung wird in einer Laboranlage einer Ultrafiltration unterzogen, bis der Gehalt an Chloridionen auf ca. ein Achtel des ursprünglichen Wertes zurückgegangen ist. Die dialysierte Lösung wird anschließend durch ein 2,0 u Filter fitriert und zur Trockne eingeengt. 3,0 g des trockenen Rückstandes werden in 100 g eines Gemisches aus 84 g Wasser, 8 g 1,5-Pentandiol und 8 g 2-Pyrrolidon gelöst. Man erhält eine schwarze Tinte, mit der sich beim ink jet-Druck nach dem bubble jet- oder Piezo-System konturenscharfe echte Drucke auf Papier erzielen lassen.

### Beispiel 4 bis 61

In analoger Weise zu Beispiel 1 erhält man die in der Tabelle 1 angegebenen schwarz färbenden Disazofarbstoffe:

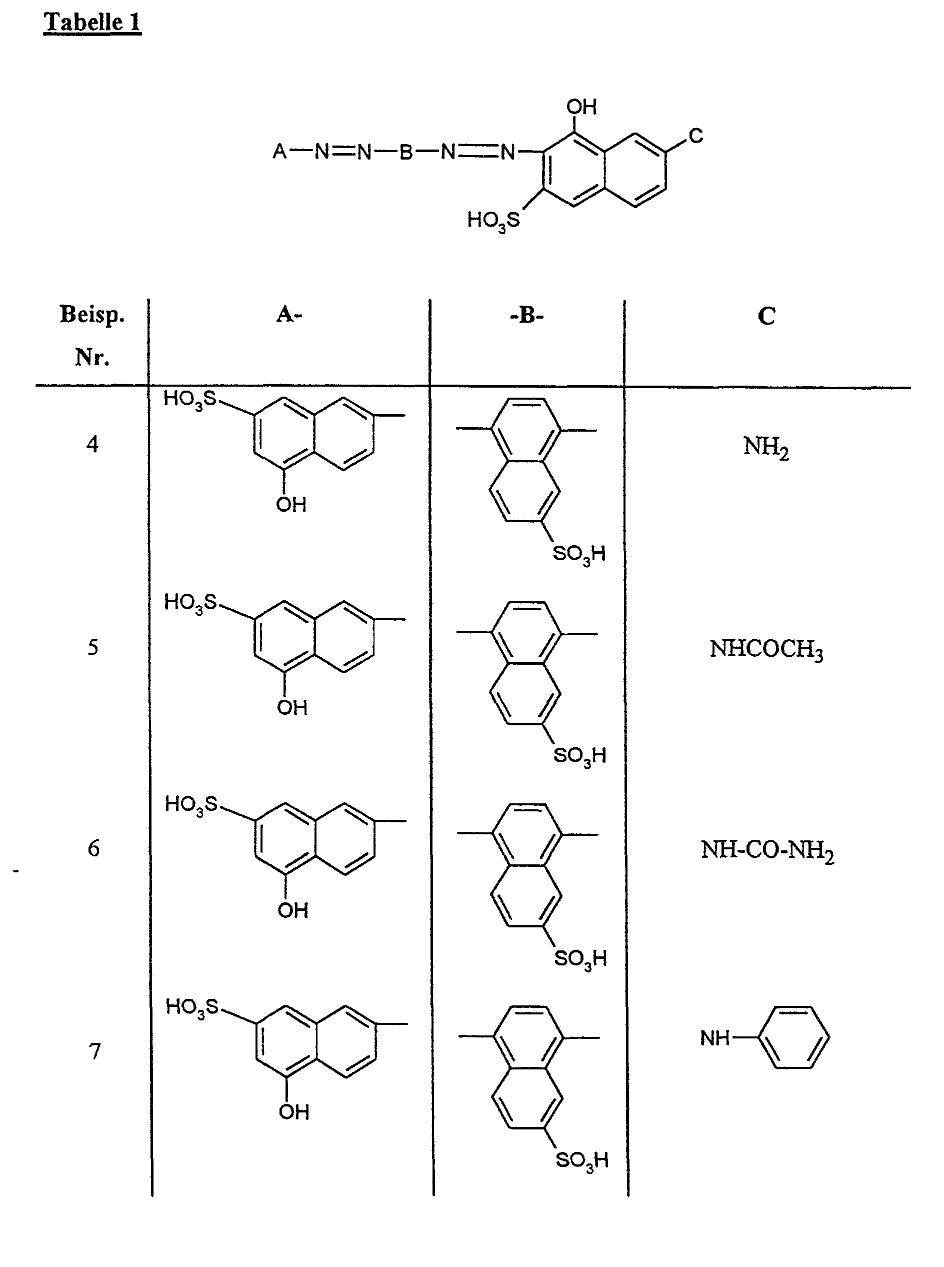

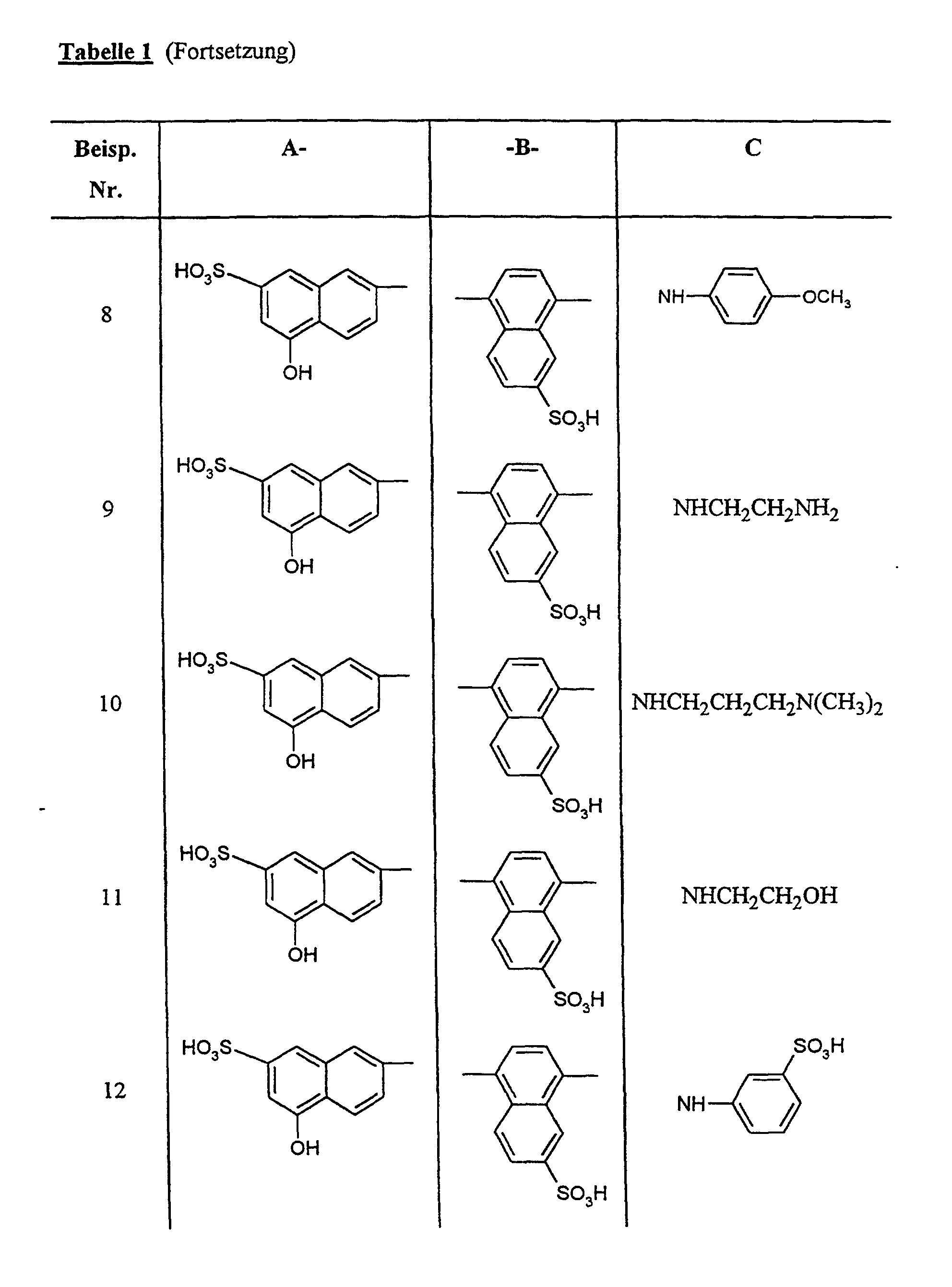

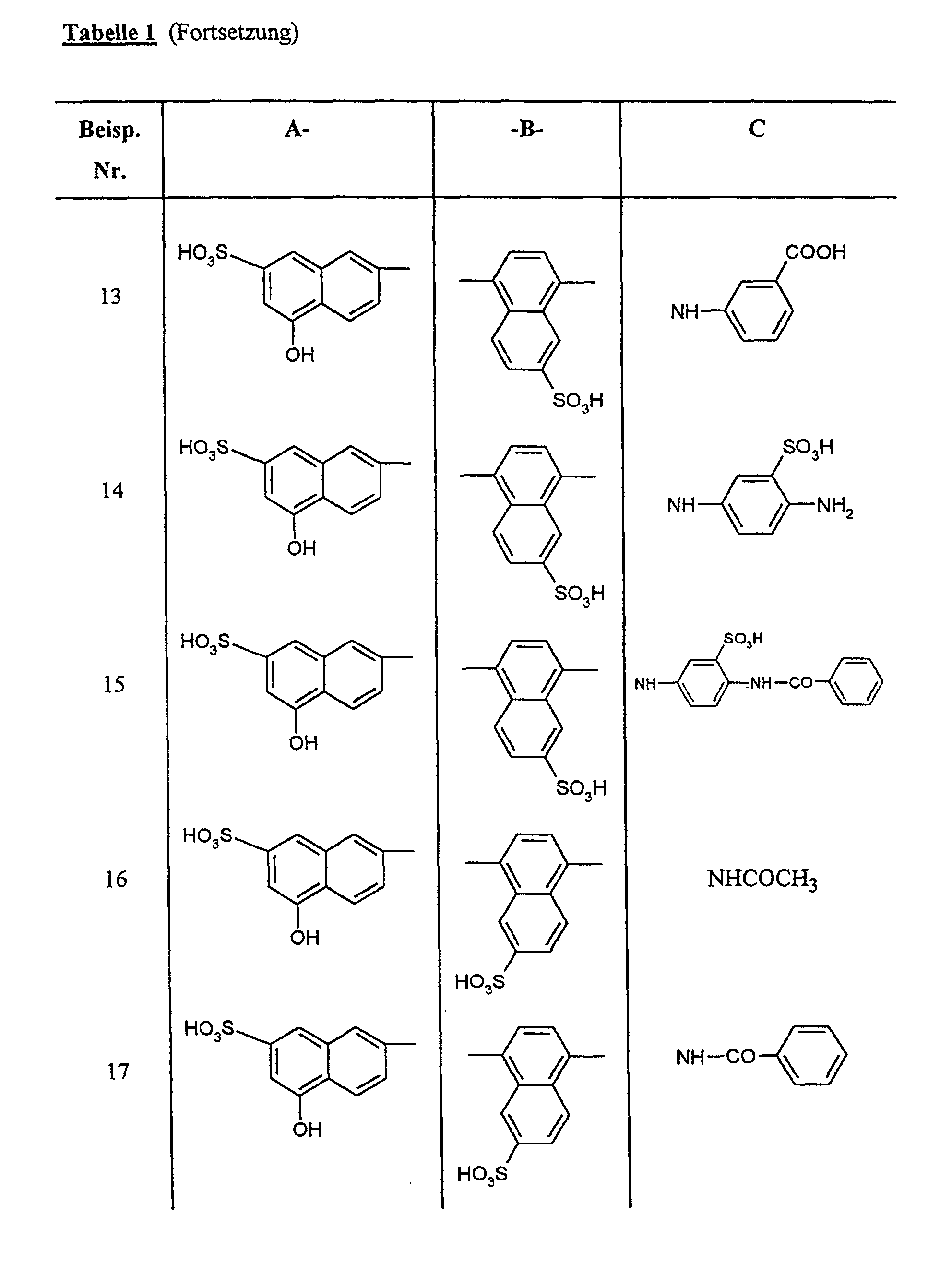

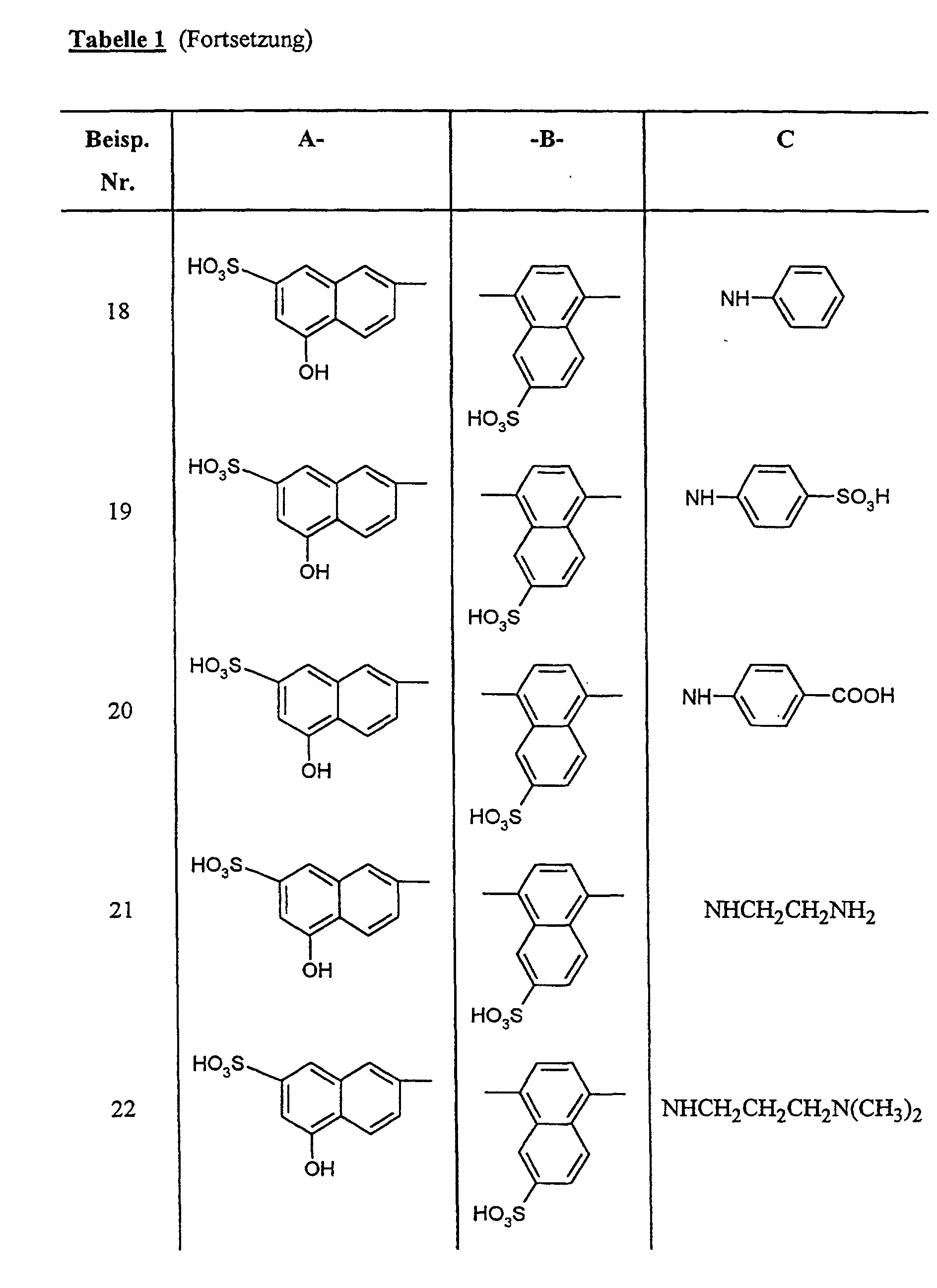

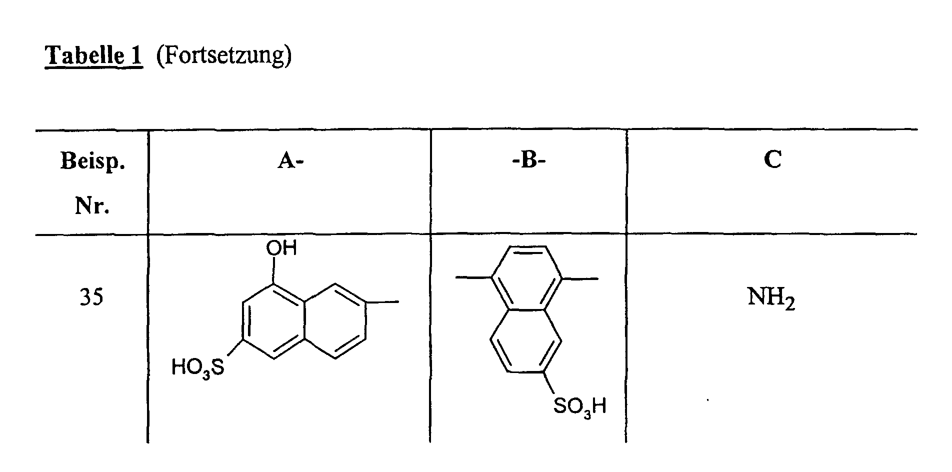

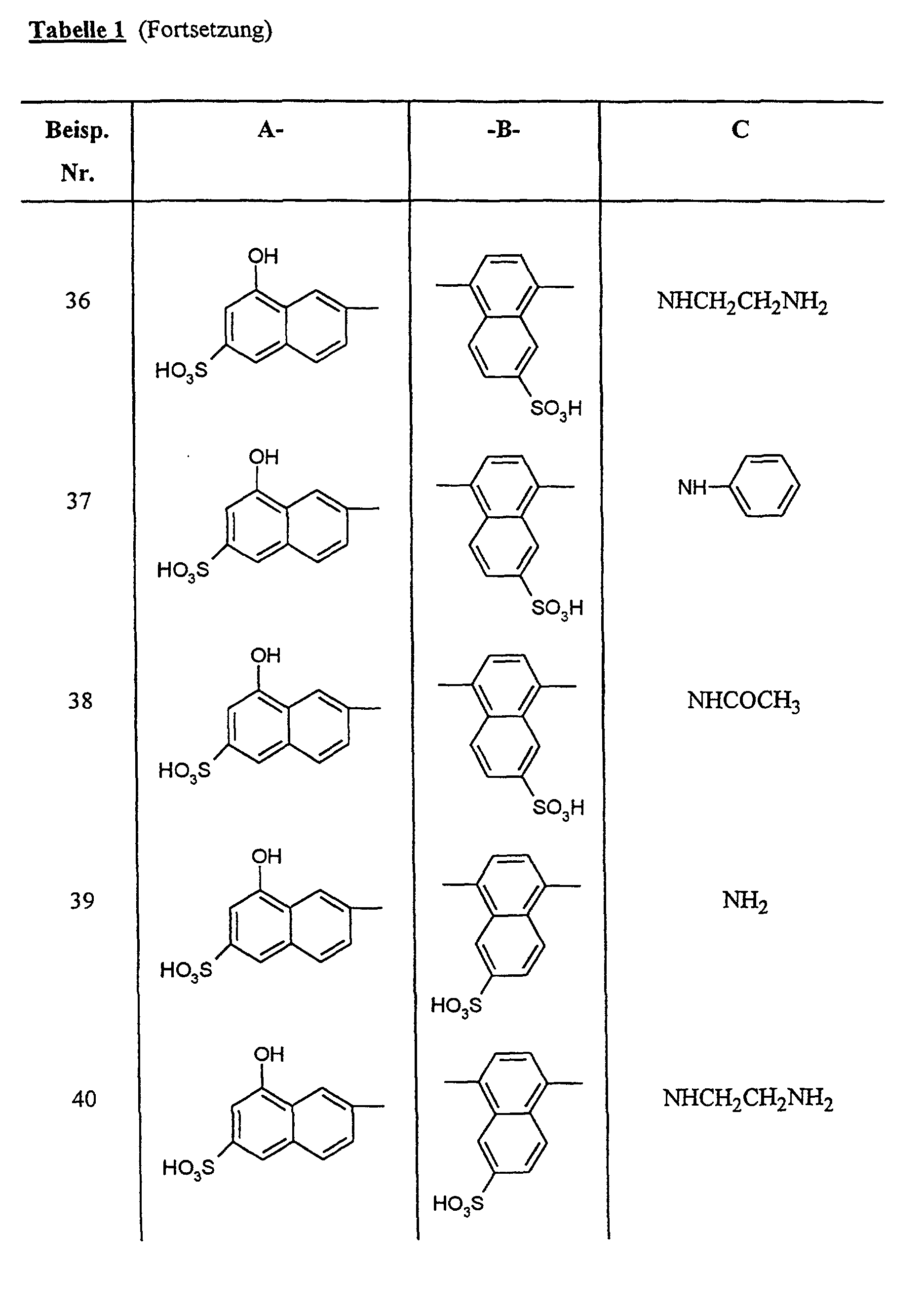

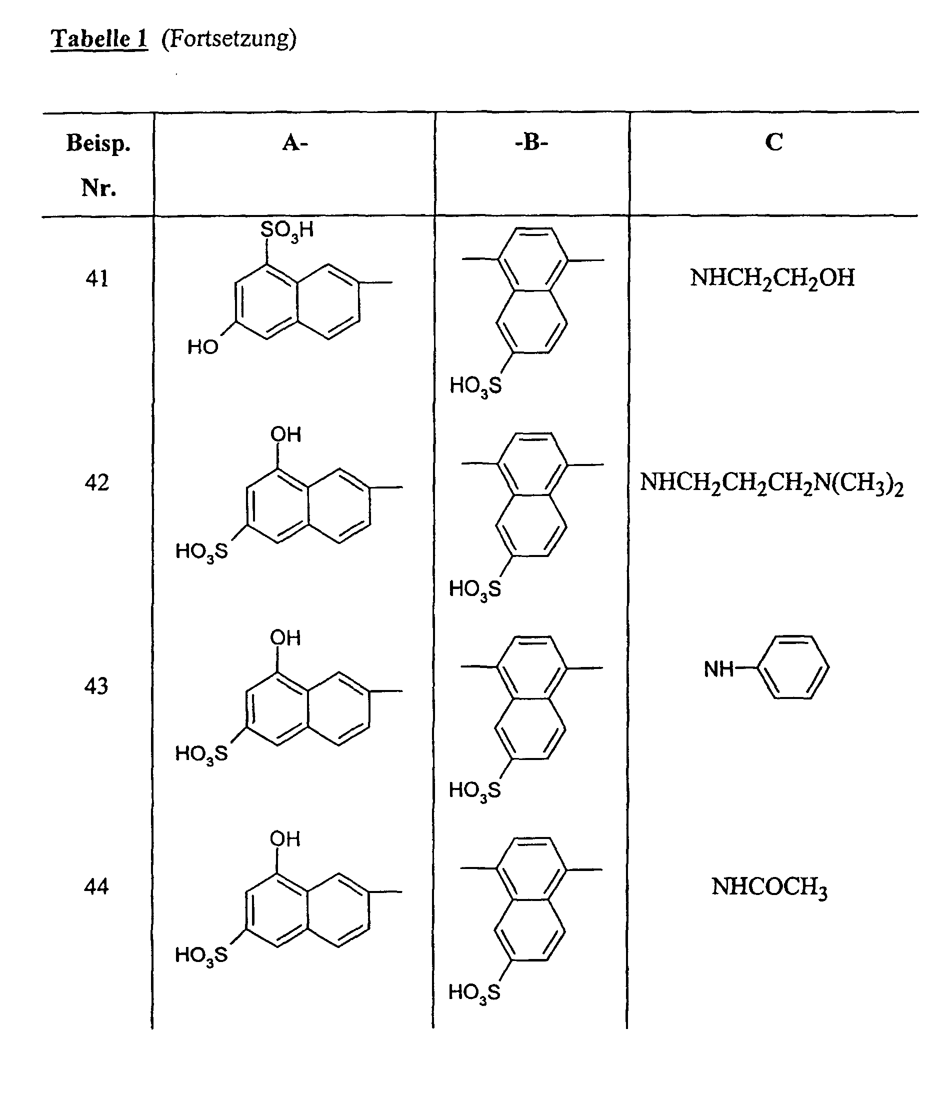

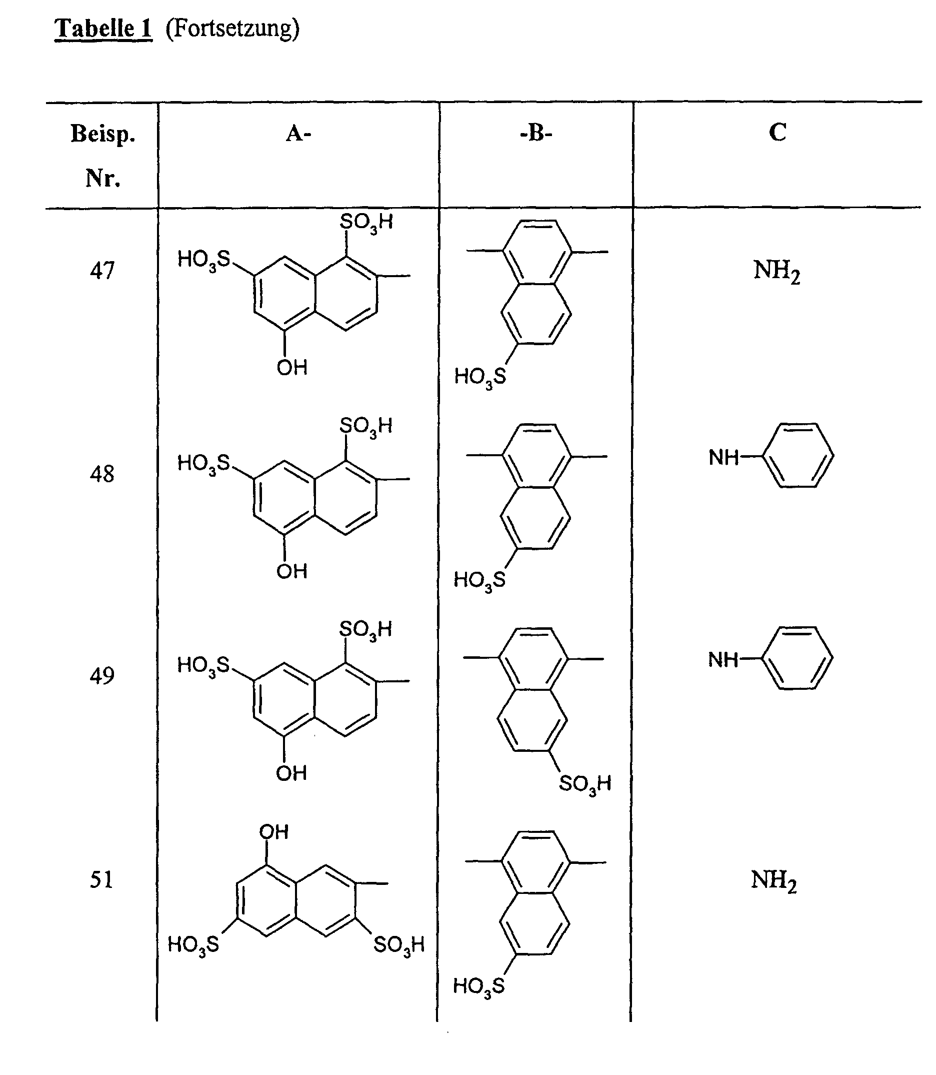

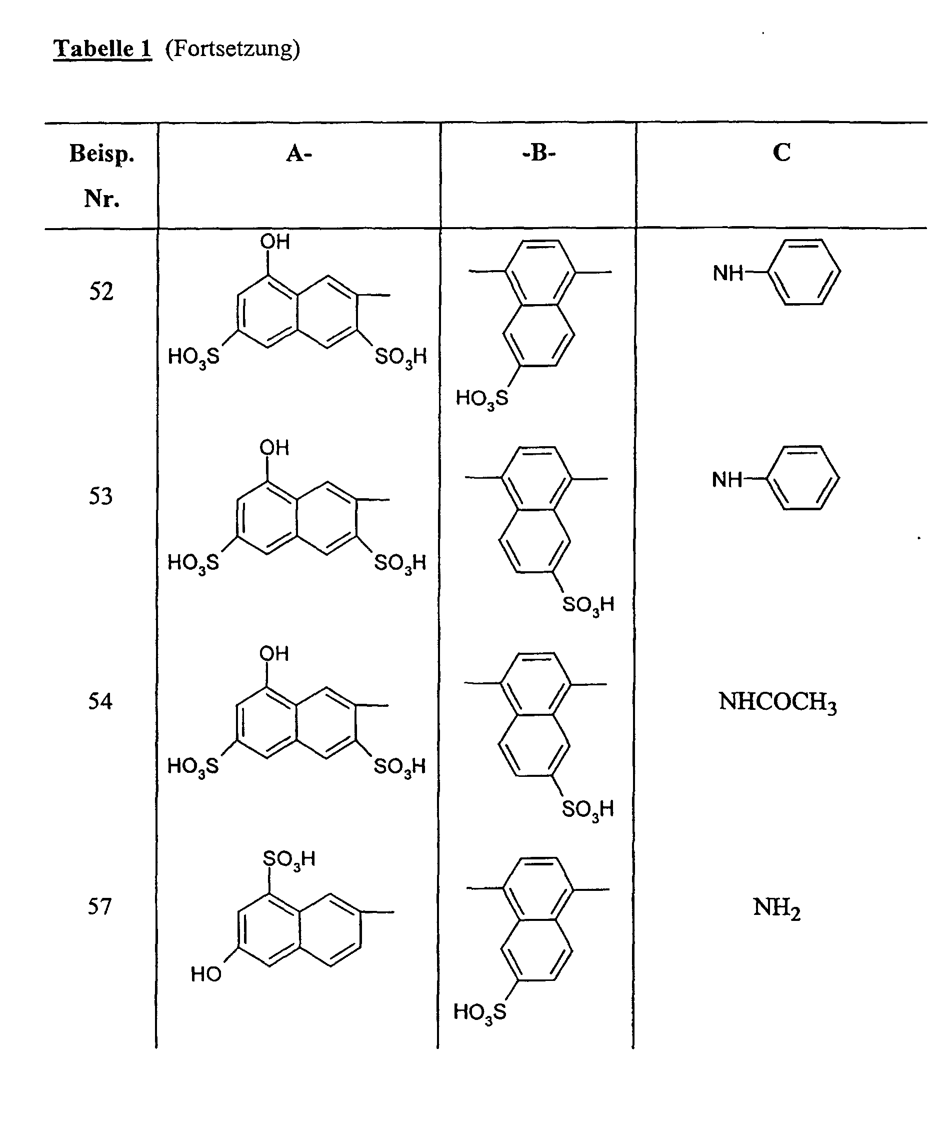

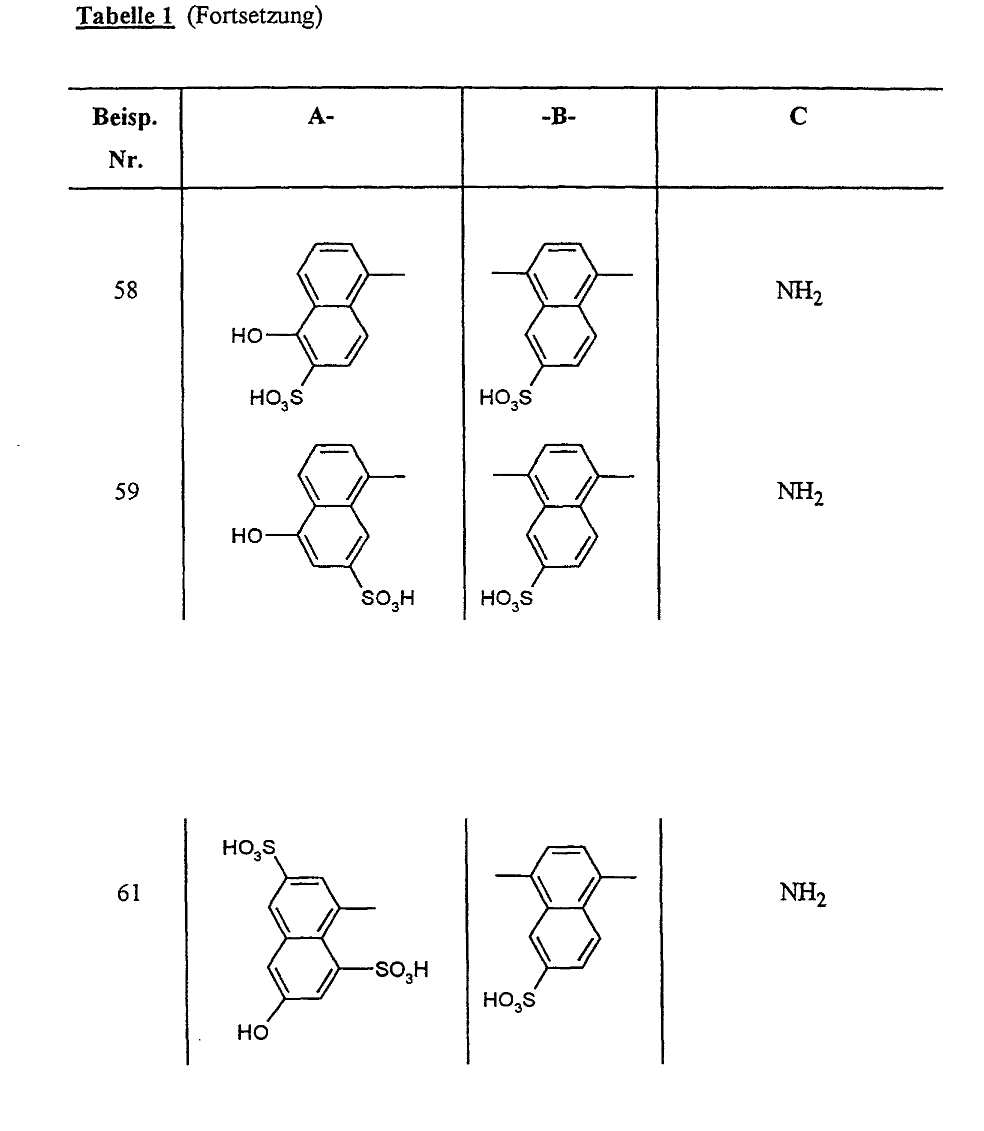

### Färbebeispiel 1

In einem Bad aus 250 ml Wasser, 0,2 g Soda, 4g Natriumsulfat und 0,15 g des gemäß Beispiel 1 hergestellten Farbstoffes trägt man bei 40°C 10 g Baumwollgarn ein. Man erhöht die Temperatur der Färbeflotte unter ständiger Bewegung des Garnes auf 95°C und färbt 45 Minuten bei dieser Temperatur, bis die Restflotte nur noch schwach gefärbt ist. Das gefärbte Garn wird anschließend augewrungen, mit kaltem Wasser ausgespült und bei 60°C getrocknet. Es ist tiefschwarz gefärbt und zeichnet sich durch eine gute Wasch- und Schweißechtheit aus.

### Färbebeispiel 2

800 kg gebleichte Sulfatcellulose und 200 kg gebleichte Sulfitcellulose werden in einem Pulper mit 14 m³ in Fabrikationswasser 30 Minuten lang bis zur Stippenfreiheit aufgeschlagen. Die Pulpe wird anschließend in eine Ableerbütte überführt, mit Stoffmühlen auf einen Mahlgrad von 25⁰ SR (nach Schopper-Riegler) gemahlen und gelangt schließlich in eine Mischbütte, wo noch 250 kg Kaolin Ia, 1 % Farbstoff des Beispiels 2 als wäßrige Lösung von 20 g/l, und nach einer Aufziehzeit von 15 Minuten noch 2 % Harzleim sowie 10 Minuten später 4 % Alaun zugesetzt werden. Der %-Gehalt von Farbstoff, Harzleim und Alaun bezieht sich jeweils auf die absolut trockene Faser. Der pH des Gemisches beträgt 5,3. Die Zellstoffsuspension wird anschließend nach einem in der Industrie üblichem Verfahren auf einer Papiermaschine zu Papier verarbeitet. Man erhält ein intensiv schwarz gefärbtes Druckpapier mit guter Beständigkeit gegenüber Sodalösung, Essigsäure, Wasser und Alkohol. Das Abwasser ist praktisch farblos.

### Färbebeipiel 3

1000 kg gebleichte Sulfatcellulose werden wie unter Färbebeispiel 2 angegeben aufgeschlagen und gemahlen. In der Mischbütte erfolgt der Zusatz von 1 % eines Fixiermittels und 1 % Farbstoff des Beispiels 2 in Form einer wäßrigen Lösung von 20 g/l. Nach 15 Minuten Aufziehzeit wird die Cellulose zu Papier verarbeitet. Man erhält ein schwarz gefärbtes Tissue mit sehr guten Echtheiten gegenüber Sodalösung, Essigsäure, Wasser und Alkohol.

## Patentansprüche (Patentansprüche für folgende(n) Vertragsstaat(en): CH, DE, FR, GB, IT, LI)

1. Verwendung von Farbstoffen der Formel (4) zum Färben von Papier in der Masse oder in der Oberfläche, wobei der Ink-Jet-Druck ausgenommen ist, 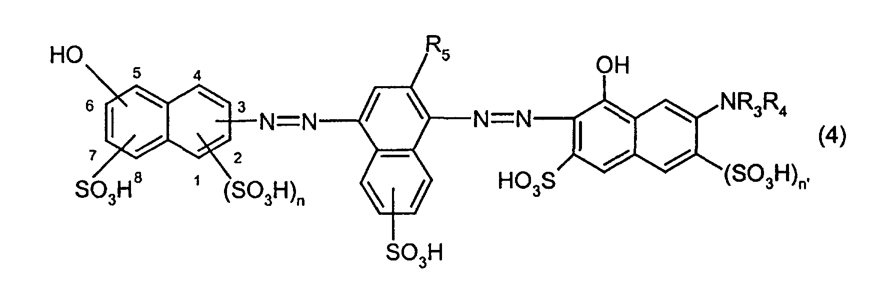 worin
R₃ für Wasserstoff, für unsubstituiertes C₁-C₄-Alkyl, oder durch NH₂, Di-(C₁-C₄-alkyl)amino, OH oder C₁-C₄-Alkoxy substituiertes C₁-C₄-Alkyl, für unsubstituiertes Aryl, oder für ein- bis vierfach gleich oder verschieden durch C₁-C₄-Alkyl, C₁-C₄-Alkoxy, NH₂, OH, Sulfo oder Carboxy substituiertes Aryl, für Ureido, Formyl, C₁-C₄-Alkylcarbonyl, für unsubstituiertes Benzoyl oder für ein- bis vierfach gleich oder verschieden durch C₁-C₄-Alkyl, C₁-C₄-Alkoxy, Sulfo oder Carboxy substituiertes Benzoyl,
R₄ für Wasserstoff, unsubstituiertes C₁-C₄-Alkyl oder für durch Hydroxy oder C₁-C₄-Alkoxy substituiertes C₁-C₄-Alkyl,
R₅ für Wasserstoff, C₁-C₄-Alkyl oder C₁-C₄-Alkoxy steht,
und
n und n' unabhängig voneinander für die Zahl 0 oder 1 stehen,
wobei im linken Naphthylring der Formel (4) die OH-Gruppe in 5-, 6- oder 8-Stellung, die SO₃H-Gruppe in 6-, 7- oder 8-Stellung, die (SO₃H)ₙ-Gruppe in 1-, 3- oder 4-Stellung und die Azogruppe in 1- oder 2-Stellung stehen.

## Patentansprüche (Patentansprüche für folgende(n) Vertragsstaat(en): ES, PT)

1. Verwendung von Farbstoffen der Formel (4) zum Färben von Papier in der Masse oder in der Oberfläche, 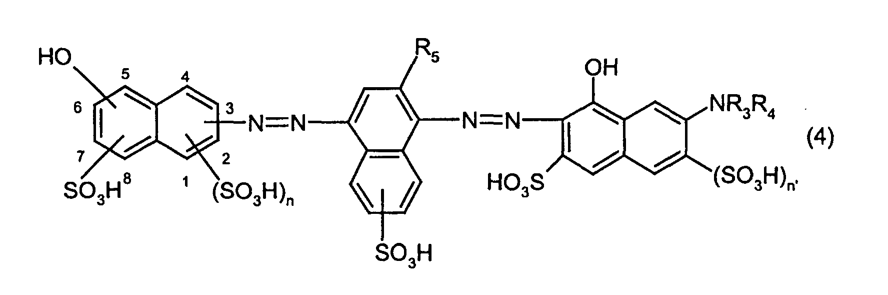 worin
R₁ für Wasserstoff, C₁-C₄-Alkyl oder C₁-C₄-Alkoxy, C₁-C₄-Alkylcarbonylamino, Ureido oder Amino,
R₂ für Wasserstoff, C₁-C₄-Alkyl, C₁-C₄-Aloxy, Sulfo oder Carboxy,
R₃ für Wasserstoff, für unsubstituiertes C₁-C₄-Alkyl, oder durch NH₂, Di-(C₁-C₄-alkyl)amino, OH oder C₁-C₄-Alkoxy substituiertes C₁-C₄-Alkyl, für unsubstituiertes Aryl, oder für ein- bis vierfach gleich oder verschieden durch C₁-C₄-Alkyl, C₁-C₄-Alkoxy, NH₂, OH, Sulfo oder Carboxy substituiertes Aryl, für Ureido, Formyl, C₁-C₄-Alkylcarbonyl, für unsubstituiertes Benzoyl oder für ein- bis vierfach gleich oder verschieden durch C₁-C₄-Alkyl, C₁-C₄-Alkoxy, Sulfo oder Carboxy substituiertes Benzoyl,
R₄ für Wasserstoff, unsubstituiertes C₁-C₄-Alkyl oder für durch Hydroxy oder C₁-C₄-Alkoxy substituiertes C₁-C₄-Alkyl
und
n und n' unabhängig voneinander für die Zahl 0 oder 1 stehen,
wobei im linken Naphthylring der Formel (4) die OH-Gruppe in 5-, 6- oder 8-Stellung, die SO₃H-Gruppe in 6-, 7- oder 8-Stellung, die (SO₃H)ₙ-Gruppe in 1-, 3- oder 4-Stellung und die Azogruppe in 1- oder 2-Stellung stehen.

## Claims (Claims for the following Contracting State(s): CH, DE, FR, GB, IT, LI)

1. Use of dyes of the formula (4) for dyeing paper in the pulp or in the surface, with the exception of ink jet printing, 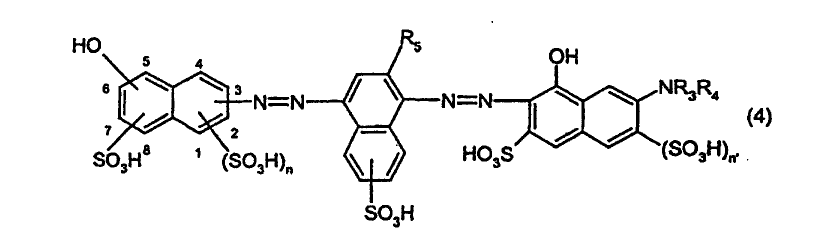 wherein
R₃ represents hydrogen, or represents unsubstituted C₁-C₄-alkyl, or C₁-C₄-alkyl which is substituted by NH₂, di-(C₁-C₄-alkyl)amino, OH or C₁-C₄-alkoxy, or represents unsubstituted aryl, or represents aryl which is substituted one to four times in an identical or different manner by C₁-C₄-alkyl, C₁-C₄-alkoxy, NH₂, OH, sulpho or carboxyl, or represents ureido, formyl or C₁-C₄-alkylcarbonyl, or represents unsubstituted benzoyl, or represents benzoyl which is substituted one to four times in an identical or different manner by C₁-C₄-alkyl, C₁-C₄-alkoxy, sulpho or carboxyl,
R₄ represents hydrogen or unsubstituted C₁-C₄-alkyl, or represents C₁-C₄-alkyl which is substituted by hydroxyl or C₁-C₄-alkoxy
R₅ represents hydrogen, C₁-C₄-alkyl or C₁-C₄-alkoxy,
and
n and n' independently of one another represent the number 0 or 1,
wherein, in the left-hand naphthyl ring of formula (4), the OH group is in the 5-, 6- or 8-position, the SO₃H group is in the 6-, 7- or 8-position, the (SO₃H)ₙ-group is in the 1-, 3- or 4-position and the azo group is in the 1- or 2-position.

## Claims (Claims for the following Contracting State(s): ES, PT)

1. Use of dyes of the formula (4) for dyeing paper in the pulp or in the surface, 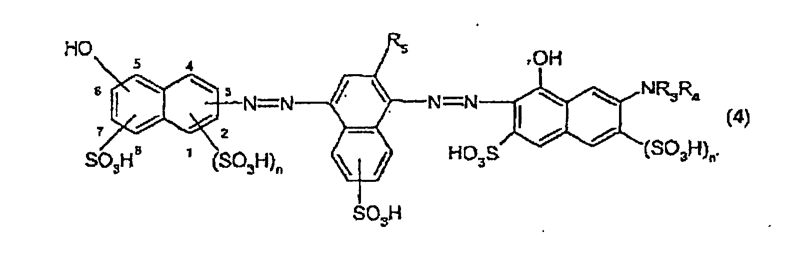 wherein
R¹ represents hydrogen, C₁-C₄-alkyl or C₁-C₄-alkoxy, C₁-C₄-alkylcarbonylamino, ureido or amino,
R² represents hydrogen, C₁-C₄-alkyl, C₁-C₄-alkoxy, sulfo or carboxyl,
R₃ represents hydrogen, or represents unsubstituted C₁-C₄-alkyl, or C₁-C₄-alkyl which is substituted by NH₂, di-(C₁-C₄-alkyl)amino, OH or C₁-C₄-alkoxy, or represents unsubstituted aryl, or represents aryl which is substituted one to four times in an identical or different manner by C₁-C₄-alkyl, C₁-C₄-alkoxy, NH₂, OH, sulpho or carboxyl, or represents ureido, formyl or C₁-C₄-alkylcarbonyl, or represents unsubstituted benzoyl, or represents benzoyl which is substituted one to four times in an identical or different manner by C₁-C₄-alkyl, C₁-C₄-alkoxy, sulpho or carboxyl,
R₄ represents hydrogen or unsubstituted C₁-C₄-alkyl, or represents C₁-C₄-alkyl which is substituted by hydroxyl or C₁-C₄-alkoxy,
R₅ represents hydrogen, C₁-C₄-alkyl or C₁-C₄-alkoxy,
and
n and n' independently of one another represent the number 0 or 1,
wherein, in the left-hand naphthyl ring of formula (4), the OH group is in the 5-, 6- or 8-position, the SO₃H group is in the 6-, 7- or 8-position, the (SO₃H)ₙ-group is in the 1-, 3- or 4-position and the azo group is in the 1- or 2-position.

## Revendications (Revendications pour l'(les) Etat(s) contractant(s) suivant(s): CH, DE, FR, GB, IT, LI)

1. Utilisation de colorants de formule (4) pour la coloration du papier dans la masse ou dans la surface, l'impression par jet d'encre étant exclue, 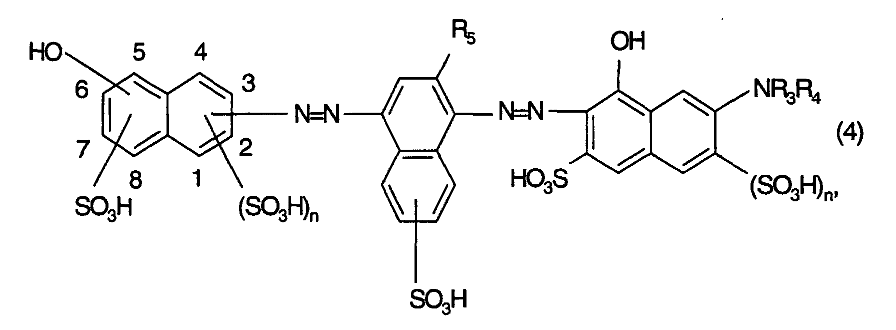 où
R₃ représente l'hydrogène, alkyle en C₁-C₄ monosubstitué, ou alkyle en C₁-C₄ substitué par NH₂, di-(alkyle en C₁-C₄)amino, OH ou alcoxy en C₁-C₄, aryle non substitué, ou aryle substitué une à quatre fois de manière identique ou différente par alkyle en C₁-C₄, alcoxy en C₁-C₄, NH₂, OH, sulfo ou carboxyle, uréido, formyle, alkyle en C₁-C₄-carbonyle, benzoyle non substitué ou benzoyle substitué une à quatre fois de manière identique ou différente par alkyle en C₁-C₄, alcoxy en C₁-C₄, sulfo ou carboxyle,
R₄ représente l'hydrogène, alkyle en C₁-C₄ non substitué ou alkyle en C₁-C₄ substitué par hydroxyle ou alcoxy en C₁-C₄,
R₅ représente l'hydrogène, alkyle en C₁-C₄ ou alcoxy en C₁-C₄,
et
n et n' représentent indépendamment l'un de l'autre le nombre 0 ou 1,
où, dans le cycle naphtyle de gauche de la formule (4), le groupe OH est situé en position 5, 6 ou 8, le groupe SO₃H est situé en position 6, 7 ou 8, le groupe (SO₃H)ₙ est situé en position 1, 3 ou 4 et le groupe azo est situé en position 1 ou 2.

## Revendications (Revendications pour l'(les) Etat(s) contractant(s) suivant(s): ES, PT)

1. Utilisation de colorants de formule (4) pour la coloration du papier dans la masse ou dans la surface, 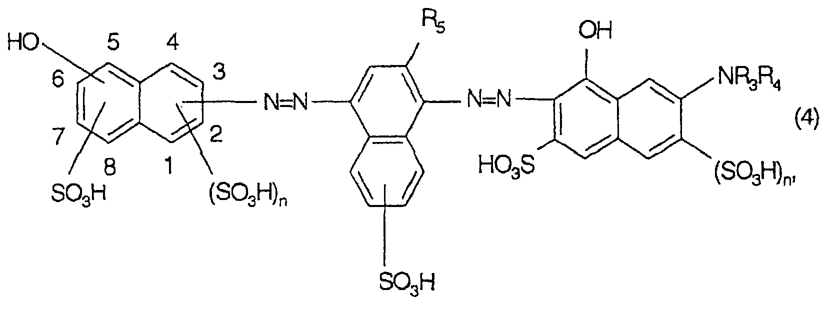 où
R₁ représente l'hydrogène, alkyle en C₁-C₄ ou alcoxy en C₁-C₄, (alkyle en C₁-C₄)carbonylamino, uréido ou amino,
R₂ représente l'hydrogène, alkyle en C₁-C₄, alcoxy en C₁-C₄, sulfo ou carboxyle,
R₃ représente l'hydrogène, alkyle en C₁-C₄ non substitué, ou alkyle en C₁-C₄ substitué par NH₂, di-(alkyle en C₁-C₄)amino, OH ou alcoxy en C₁-C₄, aryle non substitué, ou aryle substitué une à quatre fois de manière identique ou différente par alkyle en C₁-C₄, alcoxy en C₁-C₄, NH₂, OH, sulfo ou carboxyle, uréido, formyle, alkyle en C₁-C₄-carbonyle, benzoyle non substitué ou benzoyle substitué une à quatre fois de manière identique ou différente par alkyle en C₁-C₄, alcoxy en C₁-C₄, sulfo ou carboxyle,
R₄ représente l'hydrogène, alkyle en C₁-C₄ non substitué ou alkyle en C₁-C₄ substitué par hydroxyle ou alcoxy en C₁-C₄,
et
n et n' représentent indépendamment l'un de l'autre le nombre 0 ou 1,
où, dans le cycle naphtyle de gauche de la formule (4), le groupe OH est situé en position 5, 6 ou 8, le groupe SO₃H est situé en position 6, 7 ou 8, le groupe (SO₃H)ₙ est situé en position 1, 3 ou 4 et le groupe azo est situé en position 1 ou 2.
